# EUROPEAN PATENT APPLICATION

(11) **EP 4 645 791 A1**
(43) Date of publication of application: **05.11.2025**
(21) Application number: 24174159.4
(22) Date of filing: 03.05.2024
(51) Int. Cl.: H04L 41/044, H04L 43/50

(54) **DISTRIBUTED NETWORK OF FAULT SIGNALLING SOURCES**

(71) Applicant: aiMotive Kft., 1025 Budapest (HU)
(72) Inventor: VARGA, Márton, 1085 Budapest (HU); SZUCS, Imre, 5420 Túrkeve (HU); NAGY, Gyula, 1114 Budapest (HU); PÁL, Tamás, 1164 Budapest (HU); MONOSTORI, Balázs, 1023 Budapest (HU)
(74) Representative: Vossius & Partner Patentanwälte Rechtsanwälte mbB

(57) **Abstract**

The present disclosure relates to a distributed network of fault signalling sources. The distributed network comprises a central module, a plurality of signal paths, a plurality of fault signalling sources provided at an output of any one of the plurality of signal paths and configured to detect a fault, generate a fault signal and transmit said fault signal to at least one network junction point. The at least one network junction point is/are connected to the central module and the at least one network junction point is configured to transmit said fault signal to the central module. The disclosure further relates to a corresponding method.

## Description

The present disclosure relates to a distributed network of fault signalling sources and a corresponding method.

With increasing computational performance in recent years, the requirements in the electronics of safety critical areas (e.g., automotive, medical, railway, aviation, nuclear, military, etc.) to implement the intended functionality have also risen.

Introducing machine learning / artificial intelligence methods to these industries results in an increasing demand for the best technologically achievable performance (a.k.a. high-performance computing).

While the well-known, widely accepted and proven in use functional safety practices may still be applicable at a hardware level, their straightforward implementation very often becomes a bottleneck and causes limitations in the computational performance, PPA (performance-power-area) trade-off or manufacturability of a device.

To overcome these limitations, there is a need for new and/or optimised implementations.

The present disclosure has been made in view of the above problems. A reliable and efficient distributed network of fault signalling sources and network junction points (fault signal propagation nodes or in alternative terminology error propagation nodes) is disclosed.

The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a distributed network of fault signalling sources. The distributed network comprises a central module, a plurality of signal paths, a plurality of fault signalling sources provided at an output of any one of the plurality of signal paths and configured to detect a fault, generate a fault signal and transmit said fault signal to at least one network junction point (fault signal propagation node). The at least one network junction point is/are connected to the central module and the at least one network junction point is configured to transmit said fault signal to the central module.

Various embodiments may preferably implement the following features.

Preferably, the central module, the at least one network junction point and the plurality of fault signalling sources form a tree network, wherein the central module is configured as a trunk of the tree network and the plurality of fault signalling sources are configured to form the leaves of the tree network.

Preferably, the tree network is flexibly extendable. Preferably, a plurality of tree networks are provided in the distributed network.

Preferably, the central module is configured to perform a self-test process. Preferably, the self-test process comprises propagating a test signal from the central module to the plurality of fault signalling sources, and triggering a test fault signal at the plurality of fault signalling sources.

Preferably, the plurality of fault signalling sources are configured to transmit, to the at least one network junction point, at least one of a fault code or a timestamp.

Preferably, the plurality of signal paths comprise at least one processing unit and/or at least one memory.

Preferably, the plurality of fault signalling sources are configured to transmit the fault signal in a redundant manner, preferably by differential signalling or coded signalling.

Preferably, the plurality of signal paths are provided on a low level in a hierarchy of the distributed network, preferably on a register transfer level, RTL, hierarchy.

Preferably, the plurality of fault signalling sources are configured to detect faults on the plurality of signal paths using a comparison of duplicated paths or error detection code, EDC.

Preferably, the plurality of fault signalling sources are provided at critical system points, preferably at a data manipulation point or at a register of a finite state machine, FSM.

Preferably, the distributed network is implemented as part of a hardware IP or physical realisation of a system on a chip, SoC, a neural network processing unit, NPU, a video processing unit, a graphics processing unit, GPU, a parallel system or a distributed system.

Preferably, the plurality of signal paths comprises at least one control path and/or at least one data path.

Preferably, the central module comprises at least one processing unit.

Preferably, each of the at least one network junction points is connected to at least two fault signalling sources and/or network junction points.

Preferably, at least one of the at least one network junction points comprises a multiplexer. Preferably, the multiplexer is configured to sequentially propagate the fault signals. Preferably, the multiplexer applies a queueing mechanism. Preferably, the multiplexer comprises a plurality of inputs and is configured to hold an input signal of at least one input and configured to propagate an input signal of another input.

Preferably, the distributed network is a bus without memory.

Preferably, the distributed network is configured to propagate the fault signal to the central module within a predetermined time, preferably within a predetermined time interval. The structure of the distributed network may guarantee that the fault signal is propagated from the fault signalling source (leaf) to the trunk (central module).

Preferably, the plurality of fault detection points is configured to save the fault signal until it is determined that the fault signal can be transmitted to the central module.

The present disclosure further relates to a computer-implemented method for a distributed network of fault signalling sources comprising providing a central processing unit, providing a plurality of signal paths, detecting, at a plurality of fault signalling sources provided at an output of any one of the plurality of signal paths a fault, generating a fault signal, and transmitting said fault signal to at least one network junction point (fault signal propagation node). The at least one network junction point is/are connected to the central module and the at least one network junction point transmits said fault signal to the central module.

Various embodiments may preferably implement the following features.

Preferably, the central module, the at least one network junction point and the plurality of fault signalling sources form a tree network, wherein the central module is a trunk of the tree network and the plurality of fault signalling sources are leaves of the tree network.

Preferably, the tree network is flexibly extendable. Preferably, a plurality of tree networks are provided in the distributed network.

Preferably, the method further comprises performing, by the central module, a self-test process. Preferably, the self-test process comprises propagating a test signal from the central module to the plurality of fault signalling sources, and triggering a test fault signal at the plurality of fault signalling sources.

Preferably, the plurality of fault signalling sources transmit, to the at least one network junction point, at least one of a fault code or a timestamp.

Preferably, the plurality of signal paths comprise at least one processing unit and/or at least one memory.

Preferably, the plurality of fault signalling sources transmit the fault signal in a redundant manner, preferably by differential signalling or coded signalling.

Preferably, the plurality of signal paths is provided on a low level in a hierarchy of the distributed network, preferably on a register transfer level, RTL, hierarchy.

Preferably, the plurality of fault signalling sources detect faults on the plurality of signal paths using a comparison of duplicated paths or error detection code, EDC.

Preferably, the plurality of fault signalling sources are provided at critical system points, preferably at a data manipulation point or at a register of a finite state machine, FSM.

Preferably, the distributed network is implemented as part of a hardware IP or physical realisation of a system on a chip, SoC, a neural network processing unit, NPU, a video processing unit, a graphics processing unit, GPU, a parallel system or a distributed system.

Preferably, the plurality of signal paths comprises at least one control path and/or at least one data path.

Preferably, the central module comprises at least one processing unit.

Preferably, each of the at least one network junction points is connected to at least two fault signalling sources and/or network junction points.

Preferably, at least one of the at least one network junction points comprises a multiplexer. Preferably, the multiplexer is configured to sequentially propagate the fault signals. Preferably, the multiplexer comprises a queue. Preferably, the multiplexer comprises a plurality of inputs and is configured to hold an input signal of at least one input and configured to propagate an input signal of another input.

Preferably, the distributed network is a bus without memory.

Preferably, the distributed network propagates the fault signal to the central module within a predetermined time, preferably within a predetermined time interval.

Preferably, the plurality of fault detection points save the fault signal until it is determined that the fault signal can be transmitted to the central module.

Other aspects, features, and advantages will be apparent from the summary above, as well as from the description that follows, including the figures and the claims.

Embodiments of the present disclosure will now be described by way of example only and with reference to the following accompanying drawings. In the figures, the same reference numerals denote the same or similar elements.
Fig. 1 shows a schematic overview of a distributed network according to an embodiment of the present disclosure.
Fig. 2 shows a schematic overview of a fault signal propagation in a distributed network being a tree structure according to an embodiment of the present disclosure.
Fig. 3 schematically shows a sequential fault signal propagation according to an embodiment of the present disclosure.
Fig. 4 shows a schematic overview of a distributed network including options of an imbalanced tree structure and arbitrary expansion according to an embodiment of the present disclosure.
Fig. 5 shows a schematic overview of a test mode in a distributed network according to an embodiment of the present disclosure.
Fig. 6 shows a flow chart of a method according to an embodiment of the present disclosure.

In a large and complex digital system, there may be several fault signalling points, on several hierarchy levels. At all fault signalling sources, faults are detected, a fault signal is generated and it may be collected and transferred to a central module where the given fault signal can be handled. As will be apparent from the various embodiments of the present disclosure, the fault signal is detected and transferred in a safe, reliable, robust and deterministic manner and on the other hand it is area and power efficient and floorplan friendly, to not create constraints for the final floorplan of the design.

The present disclosure may particularly be relevant to, but not limited to, a design having a large number of distributed, low-level, fault signal detection points (fault signalling sources).

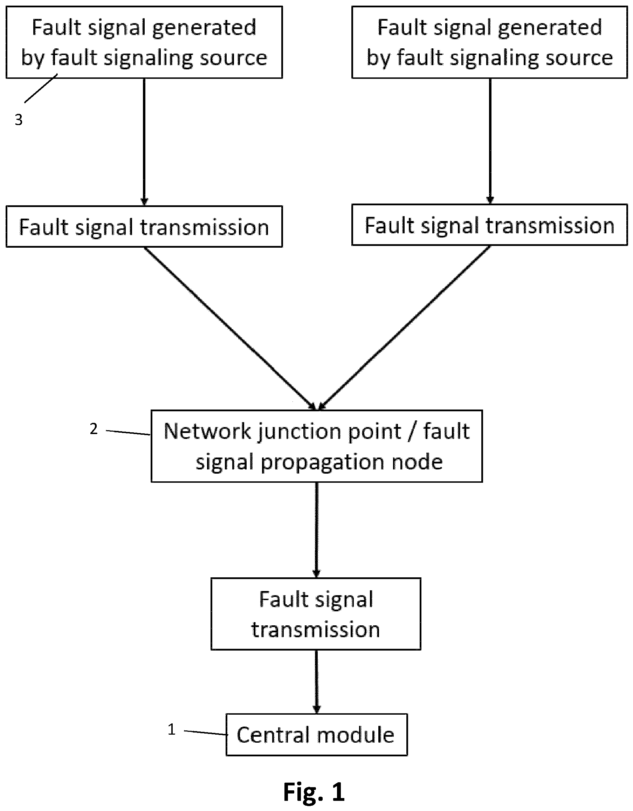

Fig. 1 shows a schematic overview of a distributed network according to an embodiment of the present disclosure. The basic principle of the present disclosure is as follows. One or more fault(s) signals (to be further described below) generated by a fault signalling source 3 (LeafX, FX, also described below) is/are transmitted (fault signal transmission) to a network junction point 2 (also referred to as an error propagation node or fault signal propagation node) and consequently forwarded to a central module 1.

The present disclosure may also be described as a tree structured network where each leaf element is a fault signalling source 3 (fault signal detection point) and the trunk of the tree is the central module 1.

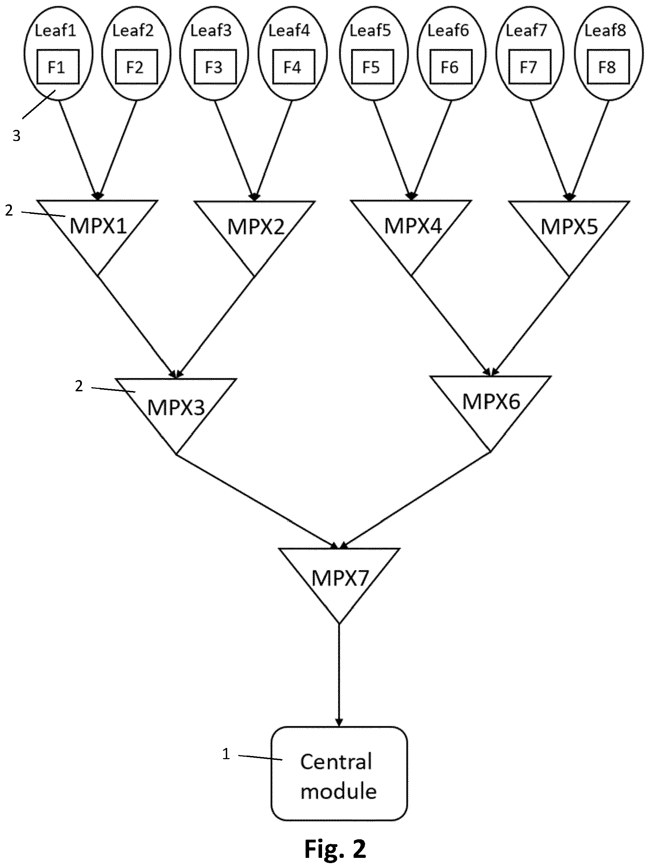

This is depicted in Fig. 2, showing a schematic overview of fault signal propagation according to an embodiment. From each leaf (fault signalling source 3, Leaf1-Leaf8), a fault signal F1-F8 may be transmitted. The branches (network junction points 2) may comprise multiplexers MPX1-MPX7 which generally may have two or more inputs and a single output. The multiplexers MPX1-MPX7 that may be time division multiplexers (TDM) may be configured to combine (multiplex) the various faults from the plurality of leaves so as to result in a single output, which then forwards the fault to the central module 1 for further processing.

However, other forms of obtaining and forwarding (fault) signals at the network junction points 2 may also be employed.

This tree topology can be configured in a floorplan friendly way. The network junction points 2 can have an arbitrary topographical distance in the final floorplan because the tree topology is suitable for a hierarchical logical design and a main dataflow. Moreover, the tree topology results in deterministic and low latency on the network, in particular in comparison to ring topologies. This comparative advantage is even more present when one would extend the design with further branches (or further fault signalling sources)

The arbitration mechanism at the network junction points 2 may guarantee that all fault signals are forwarded to the central module 1. In particular, from each fault signalling point (fault signalling source 3) the first fault signal may be delivered to the central module 1. This mechanism may also handle the phenomenon where the faulty behaviour of a part of the design can induce multiple other faults in the design. This phenomenon can rapidly generate multiple fault signals, but the network will not be overloaded and the delivery of the first fault signal is still guaranteed.

As will be further described below, according to the present disclosure, the width of the bus may not be extended towards the central module 1 but it may remain the same width throughout the propagation path.

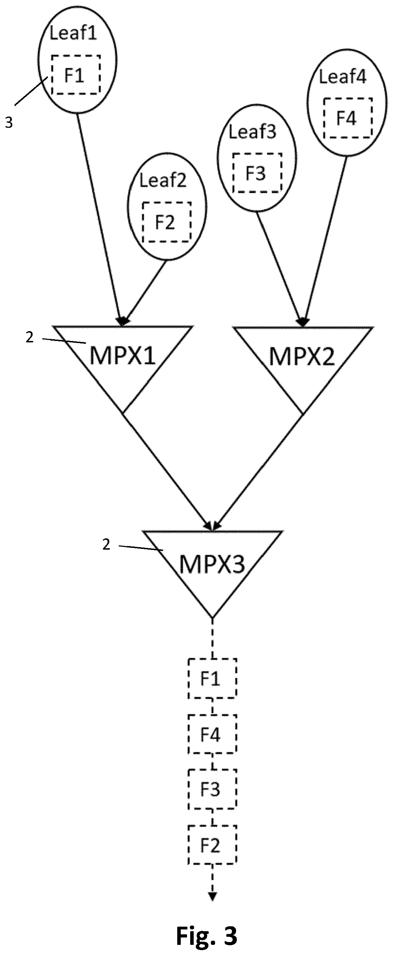

With reference to Fig. 3, a time division multiplex, or in other words a time sequential fault signal propagation is described for a small schematic network. The vertical distances of the fault signalling sources 3 and their respective faults F1-F4 to the network junction points 2, MPX1, MPX2 may indicate an order of fault generation. That is, the closer the fault is to the network junction point 2 in Fig. 3, the earlier it has been generated or the shorter the propagation path from the fault signalling source to the network junction point 2 is.

Since two fault signal paths are combined into one and the multiplexers only provide one output, in order to ensure that all fault signals are propagated to the central module 1 (not shown), the network junction points 2 are configured to provide a queueing mechanism. The queue may be a first-in-first-out (FIFO) queue, but is not limited thereto.

Hence, the network junction points 2, MPX1-MPX3, may hold and/or store fault signals until a previous fault signal is safely transmitted and thus ensure that all fault signals arrive at the central module 1. That is, the fault signals F1-F4 that arrives first at one of the multiplexers MPX1-MPX3 is forwarded first by the multiplexers MPX1-3.

In the present example of Fig. 3, the faults F1-F4 are thus ultimately transmitted to the central module 1 in the order of generation/arrival at the fault signalling sources 3, i.e., F2-F3-F4-F1, as indicated by the dashed boxes.

In other words, the different distances from the fault signalling sources 3 (leaves) to the network junction points 2 (multiplexers) shows also that a leaf maybe closer or farther from the multiplexer (i.e., equal distances are not needed for the topology). The distance may be interpreted as propagation time measured in clock cycles rather than a physical distance. So this distance results in the difference in transmission time and affects the order of the queue of the multiplexer. Due to altering the inputs to the multiplexers, all fault signals will arrive at the central computer (central module 1) within a calculatable and definite period of time.

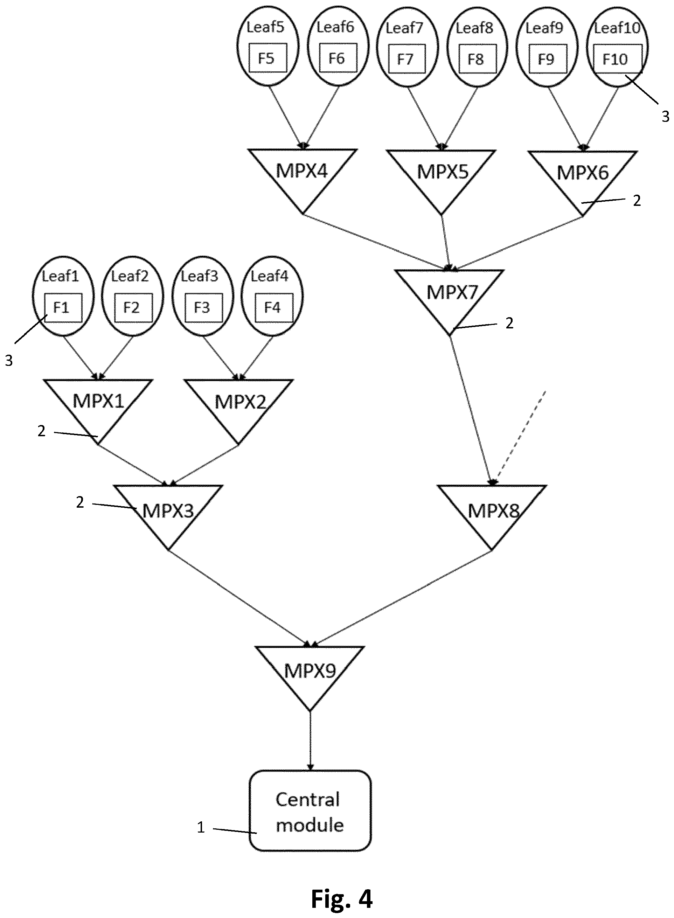

Fig. 4 shows a further schematic overview of a distributed network including options of imbalanced tree structure and arbitrary expansion according to an embodiment of the present disclosure. As can be seen from the figure, the inputs of the network junction points 2, MPX1-MPX9 are not limited to two. The network junction point MPX7, for example, has three network junction points MPX4-MPX6 as inputs. The above described fault signal propagation mechanism equally applies to this embodiment and is not repeated here.

It is also noted that the distributed network is flexibly extendable or reduceable and that additional network junction points 2 and/or fault signalling sources 3 may be added or removed. Moreover, a plurality of distributed networks may be used in the network. The distributed networks may for example be used in parallel. These parallel networks may end in the same central module 1 or in different central modules 1.

In other words, a plurality of trees may be implemented. Thus, the priority of fault signal detection can be controlled via the architecture of the specific tree. E.g., by providing fewer network junction points 2, the propagation speed can be increased due to the reduction of intersections.

In other words, as shown in Fig. 4, no symmetrical structure is needed and the number of input lines to a multiplexer may be two or more. The branches of the tree structures may be arbitrarily constructed with different number of levels, and the distributed network may be extendable without redesigning the whole structure.

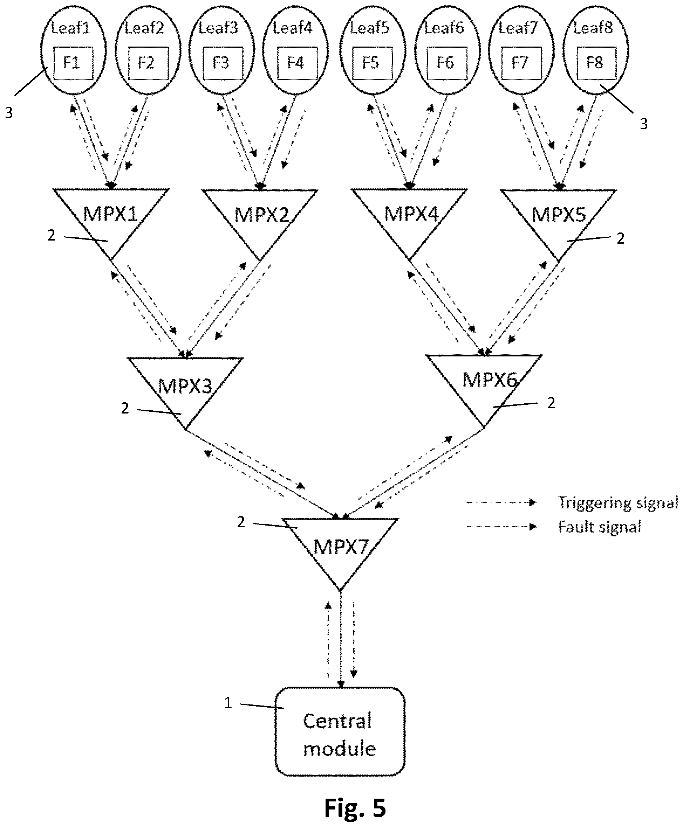

From the central module 1, a built-in self-test process can be initiated for the whole network. This is shown in Fig. 5 depicting a network equivalent to the one shown in Fig. 2. The self-test process triggers a self-test signal (dashed-dotted line, triggering signal) that propagates down via the network from the central module 1 (trunk) via the network junction points 2 (MPX1-MPX7) to the fault signalling sources 3 (leaf elements, Leaf1-Leaf8). When this test signal reaches a fault signalling source 3, it makes the fault signalling source 3 to generate a test fault signal F1-F8 (dashed line, fault signal). The test fault signals F1-F8 are equivalent to the fault signal generated during normal operation. The self-test of the tree topology is fast and deterministic. The test can also be run under operation or in parallel with other self-test mechanisms. Also, separate lines may be implemented for the triggering signals propagated to the fault signalling sources 3 (leaves).

The network elements may implement a handshake mechanism. To save area, the data rate on the bus may be limited to 50% of the theoretical maximum throughput for a given system clock. Thereby, unnecessary storage element on the bus may be saved, the bus can be stalled but does not need additional storage element for this function. In other words, the bus lanes may maintain the same width irrespective of the number of nodes (network junction points 2/fault signalling sources 3) already on the respective branch. In contrast, a common tree structure would route the information on wider and wider bus width to ensure the arrival of all necessary data.

Moreover, the presented routing may guarantee that the fault signal is propagated from the leaf to the trunk.

Referring again to Figs. 1 to 5, the present disclosure relates to a distributed network of fault signalling sources 3. The distributed network comprises a central module 1, a plurality of signal paths, a plurality of fault signalling sources (3, Leaf1-Leaf10) provided at an output of any one of the plurality of signal paths and configured to detect a fault, generate a fault signal F1-F10 and transmit said fault signal F1-F10 to at least one network junction point 2, MPX1-MPX9.

The at least one network junction point 2 is/are connected to the central module 1 and the at least one network junction point 2 is configured to transmit said fault to the central module 1.

The central module 1, the at least one network junction point 2 and the plurality of fault signalling sources 3 may, as described above, form a tree network. The central module 1 may be configured as a trunk of the tree network and the plurality of fault signalling sources 3 may be configured to form the leaves of the tree network.

The tree network may be flexibly extendable. A plurality of tree networks may also be provided in the distributed network.

The central module 1 may be configured to perform a self-test process. The self-test process may comprise propagating a test signal from the central module 1 to the plurality of fault signalling sources 3, and triggering a test fault signal F1-F8 at the plurality of fault signalling sources 3. The test fault signal(s) F1-F8 may be equivalent to the fault signal during normal operation.

The plurality of fault signalling sources 3 may be configured to transmit, to the at least one network junction point 2, at least one of a fault code or a timestamp.

The plurality of signal paths may comprise at least one processing unit and/or at least one memory. The plurality of fault signalling sources 3 may be configured to transmit the fault signal in a redundant manner, preferably by differential signalling or coded signalling. Moreover, the plurality of signal paths may be provided on a low level in a hierarchy of the distributed network, preferably on a register transfer level, RTL, hierarchy.

The plurality of fault signalling sources 3 may be configured to detect fault signals on the plurality of signal paths using a comparison of duplicated paths or error detection code, EDC. In order to detect certain errors or faults, the plurality of fault signalling sources 3 may be provided at critical system points. Such points may, e.g., be a data manipulation point or a register of a finite state machine, FSM.

The distributed network may be implemented as part of a hardware IP or physical realisation of a system on a chip, SoC, a neural network processing unit, NPU, a video processing unit, a graphics processing unit, GPU, a parallel system or a distributed system.

The plurality of signal paths may comprise at least one control path and/or at least one data path. The central module 1 may comprise at least one processing unit.

As shown in the figures and as described above, each of the at least one network junction points 2 may be connected to at least two fault signalling sources 3 and/or network junction points 2.

At least one of the at least one network junction points 2 may comprise a multiplexer MPX1-MPX9. The multiplexer MPX1-MPX9 may be configured to sequentially propagate the fault signals. For that purpose, the multiplexer MPX1-MPX9 may apply a queueing mechanism. Hence, the multiplexer MPX1-MPX9 may comprise a plurality of inputs and may be configured to hold an input signal of at least one input and configured to propagate an input signal of another input.

The distributed network may be formed as a bus without memory.

The distributed network may be configured to propagate the fault signal to the central module 1 within a predetermined time, preferably within a predetermined time interval.

Moreover, the plurality of fault signalling sources (fault detection points) 3 and/or the network junction points 2 may be configured to save the fault signal until it is determined that the fault signal can be transmitted to the central module 1.

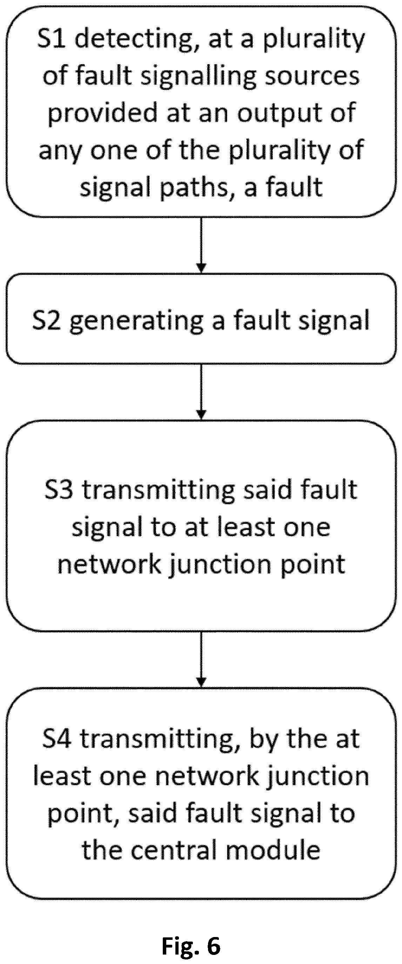

Referring to Fig. 6, the present disclosure further relates to a corresponding computer-implemented method for a distributed network of fault signalling sources comprising providing a central processing unit, providing a plurality of signal paths, detecting 51, at a plurality of fault signalling sources provided at an output of any one of the plurality of signal paths, a fault, generating S2 a fault signal, and transmitting S3 said fault signal to at least one network junction point. The at least one network junction point is/are connected to the central module and the at least one network junction point transmits S4 said fault signal to the central module.

The method may further implement the features as described above.

According to the present disclosure, the network may transfer fault codes to localise the fault detection point in the design. Also, the network may transfer timestamps to localise the fault in time. In order to further improve the fault detection and fault signal propagation, the network may have multiple types of redundancy (differential signalling, coded signalling, ...).

This network can be used for large, custom and complex distributed functional safety implementations, where the network can have an arbitrary tree shape. Applications may be high performance computing applications.

Moreover, the present disclosure may provide a built-in self-test mechanism, bi-directional signal flow, low resource handshake mechanism, floorplan friendly configuration options, and fault detection point localisation including the time of the fault signal generation and the location thereof.. It can be configured for multiple types of redundancy.

Solutions like online/offline logic BIST (build-in self-test), memory BIST and the corresponding scan chains solve different problems. The present disclosure is not DFT (Design for Test) related but rather part of the functional safety implementation. I.e., it is about monitoring hardware integrity in safety critical applications under operation and not only in self-test intervals.

The present disclosure provides an efficient and scalable solution to propagating fault signals in a distributed network. The solution further ensures that all fault signals can be received and processed.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A distributed network of fault signalling sources comprising:
a central module (1),
a plurality of signal paths,
a plurality of fault signalling sources (3) provided at an output of any one of the plurality of signal paths and configured to detect a fault, generate a fault signal and transmit said fault signal to at least one network junction point (2), and
wherein the at least one network junction point (2) is/are connected to the central module (1) and wherein the at least one network junction point (2) is configured to transmit said fault signal to the central module (1).

2. Distributed network according to claim 1, wherein the central module (1), the at least one network junction point (2) and the plurality of fault signalling sources (3) form a tree network, wherein the central module (1) is configured as a trunk of the tree network and the plurality of fault signalling sources (3) are configured to form the leaves of the tree network.

3. Distributed network according to claim 2, wherein the tree network is flexibly extendable, and/or
wherein a plurality of tree networks is provided in the distributed network.

4. Distributed network according to any one of claims 1 to 3, wherein the central module (1) is configured to perform a self-test process, wherein the self-test process comprises:
propagating a test signal from the central module (1) to the plurality of fault signalling sources (3), and
triggering a test fault signal at the plurality of fault signalling sources (3).

5. Distributed network according to any one of claims 1 to 4, wherein the plurality of fault signalling sources (3) are configured to transmit, to the at least one network junction point (2), at least one of a fault code or a timestamp.

6. Distributed network according to any one of claims 1 to 5, wherein the plurality of fault signalling sources (3) are configured to transmit the fault signal in a redundant manner, preferably by differential signalling or coded signalling.

7. Distributed network according to any one of claims 1 to 6, wherein the distributed network is implemented as part of a hardware IP or physical realisation of a system on a chip, SoC, a neural network processing unit, NPU, a video processing unit, a graphics processing unit, GPU, a parallel system or a distributed system.

8. Distributed network according to any one of claims 1 to 7, wherein the central module (1) comprises at least one processing unit.

9. Distributed network according to any one of claims 1 to 8, wherein each of the at least one network junction points (2) is connected to at least two fault signalling sources (3) and/or network junction points (2).

10. Distributed network according to any one of claims 1 to 9, wherein at least one of the at least one network junction points (2) comprises a multiplexer,
wherein preferably, the multiplexer is configured to sequentially propagate the fault signals, and/or
wherein preferably, the multiplexer applies a queueing mechanism, and/or
wherein preferably, the multiplexer comprises a plurality of inputs and is configured to hold an input signal of at least one input and configured to propagate an input signal of another input.

11. Distributed network according to any one of claims 1 to 10, wherein the distributed network is a bus without memory.

12. Distributed network according to any one of claims 1 to 11, wherein the distributed network is configured to propagate the fault signal to the central module (1) within a predetermined time, preferably within a predetermined time interval.

13. Distributed network according to any one of claims 1 to 12, wherein the plurality of fault detection points are configured to save the fault signal until it is determined that the fault signal can be transmitted to the central module (1).

14. Computer-implemented method for a distributed network of fault signalling sources (3) comprising:
providing a central processing unit,
providing a plurality of signal paths,
detecting (S1), at a plurality of fault signalling sources (3) provided at an output of any one of the plurality of signal paths, a fault,
generating (S2) a fault signal, and
transmitting (S3) said fault signal to at least one network junction point (2),
wherein the at least one network junction point (2) is/are connected to the central module and wherein the at least one network junction point (2) transmits said fault signal to the central module (1).

15. Method according to claim 14, wherein the method further implements the features of any one of claims 2 to 13.
